(19) Europäisches Patentamt
European Patent Office
Office européen des brevets

(11) **EP 4 026 870 B1**

(12) **EUROPEAN PATENT SPECIFICATION**

(45) Date of publication and mention
of the grant of the patent:
**10.01.2024 Bulletin 2024/02**

(51) International Patent Classification (IPC):
***C08J 9/28*** *(2006.01)*

(21) Application number: **22150093.7**

(22) Date of filing: **03.01.2022**

(52) Cooperative Patent Classification (CPC):
**C08J 9/28; C08J 9/283;** C08J 2201/0504;
C08J 2325/06; C08J 2333/02

(54) **METHOD FOR PRODUCING POROUS MICROSTRUCTURE**

VERFAHREN ZUR HERSTELLUNG EINER PORÖSEN MIKROSTRUKTUR

PROCÉDÉ DE PRODUCTION D'UNE MICROSTRUCTURE POREUSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2021 TW 110100498**

(43) Date of publication of application:
**13.07.2022 Bulletin 2022/28**

(73) Proprietor: **Tantti Laboratory Inc.
338 Taoyuan City (TW)**

(72) Inventors:
• **Wang, Shih-Yu
338 Taoyuan City (TW)**
• **Chen, Hui
338 Taoyuan City (TW)**
• **Lin, Pang
338 Taoyuan City (TW)**
• **Sheu, Min-Shyan
338 Taoyuan City (TW)**

(74) Representative: **John, Stefano Pasquale
6 Chalfont Road
Oxford OX2 6TH (GB)**

(56) References cited:
**US-A- 5 189 070**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The invention relates to a method for producing a porous microstructure, and generally relates to preparation of a porous microstructure using the high internal phase emulsion (HIPE) templating technology.

BACKGROUND OF THE INVENTION

High internal phase emulsion templating is an emerging technology for producing porous polymeric material. The so-called "high internal phase emulsion" refers to an emulsion where an internal phase (namely, a dispersed phase) of emulsified droplets with a volume fraction of over 74.05% are dispersed in an external phase. That is to say, the totoal valume fraction of the internal phase exceeds the maximum space that monodispersed microspheres can occupy in the emulsion. By virtue of polymerizing the external phase (namely, the continuous phase) of the high internal phase emulsion and then removing the internal phase, a polymerized high internal phase emulsion (polyHIPE) with high porosity and interconnected pores can be obtained. The porous material obtained by the high internal phase emulsion templating technology has an extremely large specific surface area and, therefore, is suitable for use as matrices for substance separation, cell culture scaffolds for tissue engineering, and support material for immobilizing enzymes. The high internal phase emulsion templating technology has the advantages of easy preparation, easy adjustment of the pore size, and easy introduction into mass production. In particular, when being used as a cell culture scaffold, the highly porous material allows cells to infiltrate into the pores, so that the cells, when cultured under agitation, can be well protected by the porous material from damage by the shearing force. In the case where the porous material serves as a substance separation matrix, its high porosity is also beneficial to overcome the problems of low mass transfer rate and excessive back pressure.

CN107311185A and JP4766812B2 disclose methods for preparing porous microstructures using the HIPE templating technology. US2004/204510A1 teaches a process of converting a polymerizable water-in-oil HIPE into a porous microstructure, in which the dispersed phase of the emulsion is allowed to coalescence to a certain extent before completion of polymerization, resulting in an increase in the pore sizes of the obtained microstructure. US5,189,070 teaches another process of converting a polymerizable water-in-oil HIPE into a porous microstructure, where the HIPE is cured in a stepwise fashion. Colver and Bon reported a method of producing a porous monolith from a Pickering water-in-oil emulsion, in which the emulsion was centrifuged to remove excess oil phase to achieve a HIPE (Colver P.J. and Bon, S.A.F., Cellular Polymer Monoliths Made via Pickering High Internal Phase Emulsions, Chem. Mater. (2007), Vol. 19, p.1537-1539). However, the high porosity of the porous microstructure may bring about a disadvantage of decreased mechanical strength. Therefore, there is still a need in the art for a method that can produce a porous microstructure with increased porosity without substantially compromising its mechanical strength.

SUMMARY OF THE INVENTION

The invention involves emulsifying two immiscible phases to obtain an emulsion, and subjecting the emulsion to a forced sedimentation, in the form of subjecting the emulsion to centrifugation, to increase a volume fraction of the dispersed phase relative to the continuous phase in the emulsion to obtain a high internal phase emulsion (HIPE), and then curing the continuous phase in the high internal phase emulsion, thereby increasing the porosity of the porous microstructure produced, as detailed in the appended claims. The inventors unexpectedly found that when the emulsion is pre-polymerized before undergoing the forced sedimentation, the two immiscible phases of the emulsion are so stabilized that adjacent units of the dispersed phase are prevented from coalescence with one another to form new units with larger volumes, thus avoiding the occurrence of uneven pore sizes and reduced mechanical strength in the porous microstructure. In other words, the pre-polymerization step and the forced sedimentation step in the present method work synergistically to lead to beneficial effects that increase the porosity of the produced microstructure without substantially reducing its mechanical strength.

...

...

...

...

...

...

...

...

BRIEF DESCRIPTION OF THE DRAWINGS

The above and other objects, features and effects of the invention will become apparent with reference to the following description of the preferred embodiments taken in conjunction with the accompanying drawings, in which:

FIG. 1 is a flowchart of a method for producing a porous microstructure according to the invention;
FIG. 2 is an electron microscopic image of a porous microstructure produced according to one embodiment of the invention;
FIGS. 3(a) and 3(b) show the compression ratios of emulsions subjected to different intensities of centrifugal force for a fixed duration, and the porosity values of the porous microstructures produced therefrom;
FIGS. 4(a) and 4(b) show the compression ratios of emulsions subjected to a fixed centrifugal force for different duration times, and the porosity values of the porous microstructures produced therefrom;
FIGS. 5(a) and 5(b) show the minimum interpore diameters of the porous microstructures produced from emulsions under different intensities of centrifugal force and/or for different centrifugal times; and
FIG. 6 shows electron microscopic images of porous microstructures produced from the high internal phase emulsions subjected to pre-polymerization and/or forced sedimentation.

DETAILED DESCRIPTION OF PREFERRED EMBODIMENTS

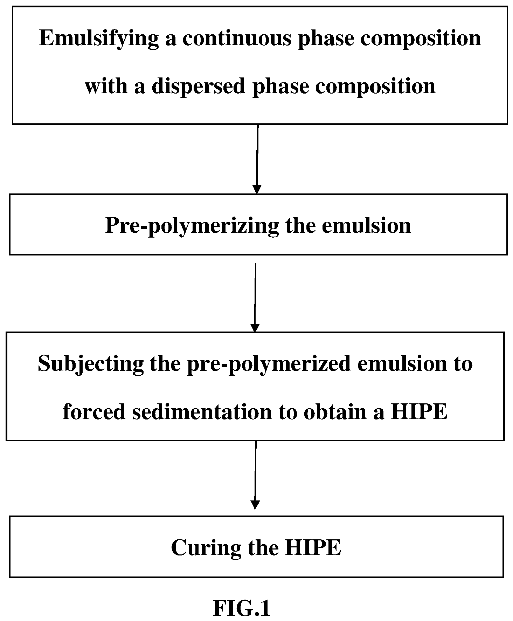

Unless specified otherwise, the following terms as used in the specification and appended claims are given the following definitions. It should be noted that the indefinite article "a" or "an" as used in the specification and claims is intended to mean one or more than one, such as "at least one," "at least two," or "at least three," and does not merely refer to a singular one. In addition, the terms "comprising/comprises," "including/includes" and "having/has" as used in the claims are open languages and do not exclude unrecited elements. The term "or" generally covers "and/or", unless otherwise specified. The terms "about" and "substantially" used throughout the specification and appended claims are used to describe and account for small fluctuations or slight changes that do not materially affect the nature of the invention.
The invention provides a method for producing a porous microstructure. According to the embodiment shown in FIG. 1, the invented method comprises the steps of: emulsifying a continuous phase composition with a dispersed phase composition to obtain an emulsion; pre-polymerizing the emulsion; subjecting the pre-polymerized emulsion to a forced sedimentation to obtain a high internal phase emulsion; and curing the high internal phase emulsion to obtain the porous microstructure.
The term "high internal phase emulsion", or abbreviated as "HIPE", is used herein to refer to an emulsion of a continuous phase (*i.e.*, external phase) and a dispersed phase (*i.e.*, internal phase) immiscible with the continuous phase, preferably a water-in-oil emulsion or an oil-in-water emulsion, wherein the dispersed phase has a volume fraction of more than 74.05% (v/v) in the emulsion, *i.e.,* the maximum space occupiable by uniform spheres in a closest packing arrangement, which can even be as high as 75-90% (v/v). As used herein, the term "continuous phase" may refer to a phase constituted by one material which is contiguous throughout the emulsion. The term "dispersed phase" may refer to a phase constituted by mutually separated units of a composition material dispersed in the continuous phase, while each and every unit in the dispersed phase is surrounded by the continuous phase. According to the invention, the continuous phase is usually the one in which polymerization occurs and may comprise at least one monomer, a crosslinking agent, and optionally an initiator and an emulsion stabilizer, whereas the dispersed phase may comprise a solvent and an electrolyte.
The at least one monomer is meant to encompass any monomers and oligomers that are capable of forming a polymer through polymerization. In one preferred embodiment, the at least one monomer comprises at least one ethylenically unsaturated monomer or acetylenically unsaturated monomer suitable for free radical polymerization, namely, organic monomers with carbon-to-carbon double bonds or triple bonds, which include but are not limited to acrylic acids and the esters thereof, such as hydroxyethyl acrylate; methacrylic acids and the esters thereof, such as glycerol methacrylate (GMA), hydroxyethyl methacrylate (HEMA), methyl methacrylate (MMA); acrylamides; methacrylamides; styrene and its derivatives, such as chloromethylstyrene, divinylbenzene (DVB), styrene sulfonate; silanes, such as dichlorodimethylsilane; pyrroles; vinylpyridine; and combinations thereof.
The term "crosslinking agent" as used therein may refer to a reagent that chemically bridges the polymer chains formed by polymerization of the at least one monomer. In one preferred embodiment, the "crosslinking agent" is a crosslinking monomer which can be dissolved along with the at least one monomer in the continuous phase and usually has multiple functional groups to enable the formation of covalent bonds between the polymer chains of the at least one monomer. Suitable crosslinking agents are well known in the art and can be selected depending upon the type of the at least one monomer, which include but are not limited to oil-soluble crosslinking agents, such as ethylene glycol dimethacrylate (EGDMA), polyethylene glycol dimethacrylate (PEGDMA), ethylene glycol diacrylate (EGDA), triethylene glycol diacrylate (TriEGDA), divinylbenzene (DVB); and water-soluble crosslinking agents, such as N,N-diallylacrylamide, N,N'-methylenebisacrylamide (MBAA). As known to those having ordinary skill in the art, the amount of the crosslinking agent used is positively correlated to the mechanical strength of the porous microstructure produced, that is, the higher the degree of crosslinking, the higher the mechanical strength of the porous microstructure. Preferably, the crosslinking agent is present in an amount about 5 to 50% by weight, such as in an amount about 5 to 25% by weight, of the continuous phase.

In addition to the monomer and the crosslinking agent, the continuous phase may optionally comprise other substances to modify the physical and/or chemical properties of the porous microstructure produced. Examples of these substances include, but are not limited to, magnetic metal particles, such as $Fe_3O_4$ particles; polysaccharides, such as cellulose, dextrans, agarose, agar, alginates; inorganic materials, such as silica; and graphene. For example, adding $Fe_3O_4$ particles may increase the mechanical strength of the porous microstructure and impart the porous microstructure with ferromagnetism.

The term "emulsion stabilizer" as used herein may refer to a surface-active agent suitable for stabilizing a high internal phase emulsion and preventing the droplet units of the dispersed phase from coalescence. The emulsion stabilizer can be added to the continuous phase composition or the dispersed phase composition prior to preparing the emulsion. The emulsion stabilizer suitable for use herein may be a nonionic surfactant, or an anionic or a cationic surfactant. In the embodiment where the high internal phase emulsion is a water-in-oil emulsion, the emulsion stabilizer preferably has a hydrophilic-lipophilic balance (HLB) of 3 to 14, and more preferably has a HLB of 4 to 6. In preferred embodiments, a non-ionic surfactant is used herein as the emulsion stabilizer, and the useful types thereof include, but are not limited to polyoxyethylated alkylphenols, polyoxyethylated alkanols, polyoxyethylated polypropylene glycols, polyoxyethylated mercaptans, long-chain carboxylic acid esters, alkanolamine condensates, quaternary acetylenic glycols, polyoxyethylene polysiloxanes, N-alkylpyrrolidones, fluorocarbon liquids and alkyl polyglycosides. Specific examples of the emulsion stabilizer include, but are not limited to sorbitan monolaurate (trade name Span®20), sorbitan tristearate (trade name Span®65), sorbitan monooleate (trade name Span®80), glycerol monooleate, polyethylene glycol 200 dioleate, polyoxyethylene-polyoxypropylene block copolymers (such as Pluronic® F-68, Pluronic® F-127, Pluronic® L-121, Pluronic® P-123), castor oil, mono-ricinoleic acid glyceride, distearyl dimethyl ammonium chloride, and dioleyl dimethyl ammonium chloride.

The term "initiator" may refer to a reagent capable of initiating polymerization and/or crosslinking reaction of the at least one monomer and/or the crosslinking agent. Preferably, the initiator used herein is a thermal initiator which is an initiator capable of initiating the polymerization and/or crosslinking reaction upon receiving heat. The initiator can be added to the continuous phase composition or the dispersed phase composition before preparing the high internal phase emulsion. According to the invention, the initiators which may be added to the continuous phase composition include, but are not limited to azobisisobutyronitrile (AIBN), azobisisoheptonitrile (ABVN), azobisisovaleronitrile, 2,2-Bis[4,4-bis(tert-butylperoxy)cyclohexyl]propane, and benzyl peroxide (BPO), whereas the initiators which may be added to the dispersed phase composition include, but are not limited to persulfates, such as ammonium persulfate and potassium persulfate. The high internal phase emulsion herein may further include a photoinitiator which can be activated by ultraviolet light or visible light to initiate the polymerization and/or crosslinking reaction and, alternatively, a suitable photoinitiator may be used to replace the thermal initiator.

The dispersed phase mainly includes a solvent. The solvent can be any liquid that is immiscible with the continuous phase. In the embodiment where the continuous phase is highly hydrophobic, the solvent may include, but be not limited to water, fluorocarbon liquids and other organic solvents that are immiscible with the continuous phase. Preferably, the solvent is water. In this embodiment, the dispersed phase may further include an electrolyte which can substantially dissociate free ions in the solvent and includes salts, acids, and bases that are soluble in the solvent. Preferably, the electrolyte may be an alkali metal sulfate, such as potassium sulfate, or an alkali metal or alkaline-earth metal chloride salt, such as sodium chloride, calcium chloride, and magnesium chloride. In the embodiment where the continuous phase is highly hydrophilic, the solvent may be selected from cyclohexane, hexane, heptane and octane. The dispersed phase may further contain one or more solutes, such as water-soluble non-ionic solutes, including carbohydrates, proteins, amino acids, alkanols and phenols.

The high internal phase emulsion may be added with a polymerization promoter. The term "promoter" may refer to a reagent capable of accelerating polymerization and/or crosslinking reaction of the at least one monomer and/or the crosslinking agent. Typical examples of the promoter include, but are not limited to, N,N,N',N'-tetramethylethylenediamine (TEMED), N,N,N',N'',N''-pentamethyl diethylene triamine (PMDTA), tris(2-dimethylamino) ethylamine, 1,1,4,7,10,10-hexamethyltriethylenetetramine, 1,4,8,11-tetramethyl-1,4,8,11-tetraazacyclotetradecane, which can promote the initiator, such as ammonium persulfate, to decompose into free radicals, thereby accelerating the polymerization and/or crosslinking reaction. Preferably, the promoter may be added in an amount of 10-100 mole% with respect to the added amount of the initiator.

The process of obtaining an emulsion through emulsification is known in the art, which generally involves uniformly mixing the at least one monomer with the crosslinking agent to form a continuous phase composition, and uniformly mixing the solvents with the electrolyte to form a dispersed phase composition. Subsequently, the continuous phase composition and the dispersed phase composition are mixed with agitation in a predetermined ratio, such as in a volume ratio of 5:95 to 40:60, so as to make the dispersed phase evenly dispersed in the continuous phase. In one preferred embodiment, the dispersed phase composition may be slowly added dropwise to the continuous phase composition, while being vigorously agitated to form an emulsion. In another preferred embodiment, an entire batch of the dispersed phase composition is directly added to the continuous phase composition at one time, while being vigorously agitated to form an emulsion. In the preferred embodiment where the dispersed phase composition is added in a single batch, a high-speed homogenizer may be used to vigorously stir and, therefore, apply a high shearing force to the emulsion, so that the separated units of the dispersed phase could have a uniform size. As well known in the art, the size and uniformity of the separated units of the dispersed phase may be adjusted by changing parameters such as the volume fraction of the dispersed phase relative to the continuous phase, the feeding rate of the dispersed phase composition, the type and concentration of the emulsion stabilizer, and the agitation rate and the temperature.

In the emulsion obtained by the emulsification step described above, the volume fraction occupied by the dispersed phase can be either higher than 74.05% (v/v) whereby the emulsion has a high internal phase, or lower than 74.05% (v/v) which will not constitute a HIPE. According to the invention, no matter whether the emulsion prepared in the emulsification step has a high internal phase, the volume fraction of the dispersed phase relative to the continuous phase can be increased by subjecting the emulsion to a forced sedimentation to obtain a HIPE. The term "forced sedimentation" may refer to separation of a portion of the continuous phase composition from the dispersed phase composition based on a difference therebetween rather than gravity by applying an additional physical or chemical force to the emulsion, such as centrifugal force, pressure, electric power, magnetic force and ultrasonic vibration. Therefore, the technical means to achieve the forced sedimentation is intended to encompass centrifugation, pressurization, ultrasonic vibration and so on, and centrifugation is particularly preferred. Centrifugation enables a partial separation of the continuous phase composition from the dispersed phase composition in light of the density difference therebetween. This technical means allows the emulsion to have an expected two-phase volume ratio in a local region, while the rest is purely the continuous phase. After the latter is removed, a HIPE with an increased volume ratio of the dispersed phase to the continuous phase is obtained. For example, when the dispersed phase composition has a higher density than the continuous phase composition, the dispersed phase composition is forced to sediment towards a lower end of a centrifuge tube during centrifugation, while the continuous phase composition remains at an upper end of the centrifuge tube. Thus, a HIPE with an increased volume ratio of the dispersed phase to the continuous phase can be collected at the lower end of the centrifuge tube. Alternatively, if the dispersed phase composition has a lower density than the continuous phase composition, a HIPE can be collected at the upper end of the centrifuge tube. According to the invention, the intensity of the centrifugal force and the duration of centrifugation are determinant in the degree of the porosity of the porous microstructure produced. As shown in Examples 1-4 below, the stronger the centrifugal force exerted or the longer the centrifugal force applied, the higher the porosity of the porous microstructure produced. In the embodiment where styrene and divinylbenzene (DVB) are used as main components of the continuous phase composition and water is used as a main component of the dispersed phase composition, the centrifugal force applied to the emulsion is preferably within a range of 50 to 500×g. Without wishing to be bound by a particular theory, it is believed that centrifugation can increase the volume ratio of the dispersed phase relative to the continuous phase in the emulsion, resulting in an increase in contact areas of adjacent separated units of the dispersed phase. As these contact areas will be converted into interpores in the subsequent vacuum drying step, the increased contact areas will lead to an increase in the number and size of the interpores, thereby enhancing the porosity of the porous microstructure.

Prior to the forced sedimentation, the emulsified emulsion may be briefly subjected to heat and/or exposed to light with an appropriate wavelength and/or be added with a small amount of the promoter, thereby pre-polymerizing a portion of the continuous phase composition, *i.e.,* allowing a portion of the at least one monomer and/or the crosslinking agent to be pre-polymerized. The degree of the pre-polymerization can be controlled either by allowing the continuous phase composition to receive a small portion of the total amount of heat or light needed to complete the polymerization and crosslinking reaction, preferably 5% to 50% of the total amount of heat or light, such as 10% to 40% of the total amount of heat or light, or by adding a small portion of the total amount of the promoter needed to complete the reaction of the continuous phase composition, preferably 5% to 50% of a total amount of the added promoter, such as 10% to 40% of the total amount of the added promoter, to enable 5% to 50% of the continuous phase composition, such as 10% to 40% of the continuous phase composition, to undergo polymerization and/or crosslinking reaction, so that the emulsion has an increased viscosity while still being flowable in the step of forced sedimentation. Suitable heating/irradiation duration and suitable amount of the promoter can be determined with reference to the prior art, and adjusted according to the molar ratio of the at least one monomer to the crosslinking agent in the continuous phase composition. During the pre-polymerization step, the promoter can be added all at once or added gradually. The term "added gradually" as used herein may mean that the promoter is divided into aliquots and added sequentially over a predetermined period of time. When adding the promoter, the emulsion may be stirred at a gentle rate to mix the promoter uniformly in the emulsion.

Application of a forced sedimentation, such as application of centrifugal force, may cause coalescence of the dispersed phase, which may in turn cause adjacent units of the dispersed phase to merge and form new units with larger volumes, resulting in excessively large inner pores in the produced porous microstructure and a reduced mechanical strength of the porous microstructure. The inventors found that when the emulsion is pre-polymerized before undergoing the forced sedimentation, the coalescence of the dispersed phase can be suppressed. Without wishing to be bound by any particular theory, it is believed that the pre-polymerization step would help stabilize the emulsion against coalescence caused by the forced sedimentation, such as centrifugal force.

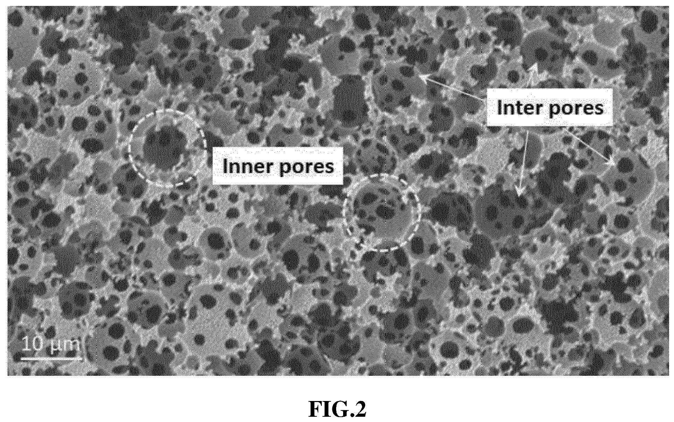

In the HIPE produced according to the method stated above, the dispersed phase is spontaneously formed into droplets that are roughly spherical and uniformly dispersed in the continuous phase. The HIPE may be further subjected to heat, and/or exposed to light with an appropriate wavelength, or added with a promoter, so as to allow the at least one monomer and/or the crosslinking agent to complete polymerization and/or crosslinking reaction, whereby the HIPE is cured into a shaped mass. The term "cure" or "curing" as used herein may refer to a process of converting the HIPE into a structure with a stable free-standing configuration. The dispersed phase is removed afterwards from the cured HIPE. In the embodiment where the HIPE is a water-in-oil emulsion, the cured HIPE may be dried directly, preferably dried under vacuum, to thereby facilitate rupturing the droplets of the dispersed phase to generate the interpores. FIG. 2 shows the porous microstructure produced after drying, in which the voids left by removal of the dispersed phase become the inner pores of the porous microstructure, and the adjacent inner pores are communicated with one another by one or more interpores.

The porous microstructure produced according to the method disclosed herein has an extremely large specific surface area and possesses spherical inner pores with a diameter of about 1 micron to 150 microns, and multiple interpores with a diameter of about 500 nanometers to 25 microns communicating with the inner pores. The porous microstructure herein may be subjected to additional processing steps to manufacture various commercial products. In one preferred embodiment, the porous microstructure herein may undergo conventional processes such as cutting and packaging, followed by appropriate chemical modification and surface functionalization, to form a monolithic column for use as a stationary phase material for chromatographic separation. The term "monolithic column" as used herein may include a continuous medium composed of the porous microstructure. In another preferred embodiment, the porous microstructure herein may be used as a cell culture scaffold serving to imitate an extracellular matrix, on which cells may be inoculated and then attach and proliferate.

The following examples are given for the purpose of illustrating the benefit of pre-polymerization in producing porous micro-structures by comparing different methods of producing said microporous structures.

Preparation of Porous Microstructures without Pre-polymerization

0.4 grams of styrene (Acros Organics B.V.B.A.), 0.1 grams of divinylbenzene (DVB; Sigma-Aldrich Corporation, USA), 0.02 grams of azobisisobutyronitrile (AIBN; Uniregion Bio-Tech Inc.) and 0.12 grams of sorbitan monooleate (trade name Span®80; Emperor Chemical Co., Ltd.) were mixed with ultrasonic agitation to prepare a continuous phase composition. 1.0 grams of deionized water was then added to the continuous phase composition, and a water-in-oil emulsion was prepared by vigorous stirring using a high-speed homogenizer (model T25; IKA, Germany). Equal aliquots of the emulsion were placed in 15 mL cylindrical centrifuge tubes (Guangzhou Jet Bio-Filtration Co., Ltd.), and centrifuged in a centrifuge (Thermo Sorvall X4R Pro; Thermo Fisher Scientific Inc., USA) for the duration times and at the centrifugal rates listed in Table 1. After the centrifugation, the emulsions were placed in an oven (model DENG YNG DO60) and heated at 70°C for 9 hours to complete polymerization. The polystyrene porous microstructures thus obtained were rinsed with ethanol, thereby removing unreacted styrene monomers, DVB monomers and sorbitan monooleate. The porous microstructures were then placed in an oven (model DENG YNG DO60) and dried at 50°C under vacuum for 12 hours to obtain dried porous microstructures.

Table 1

|  | Centrifugal rate (rpm) | Duration (min.) |
| --- | --- | --- |
| Reaction A | 300 | 5 |
| Reaction B | 500 | 5 |
| Reaction C | 500 | 7 |
| Reaction D | 500 | 9 |
| Reaction E | 750 | 5 |
| Reaction F | 1000 | 5 |
| Reaction G | 3200 | 5 |

Characterization of Porous Microstructures

The porosity of a porous microstructure is defined herein as a percentage of the pore volume relative to the total volume of the microstructure. The porosity values of the porous microstructures produced in Reactions A-G were calculated with the following formula:

$$1-[(\text{weight of the porous microstructure}/ \text{density of the continuous phase})/$$

$$\text{apparent volume of the porous microstructure}]$$

Alternatively, porosity may be determined by taking cross-sectional images of the porous microstructures using a scanning electron microscope (Thermo Fisher Scientific Inc., Phenom Pro), and then calculating the porosity using ImageJ software (National Institutes of Health, Bethesda, Maryland, USA). The compression ratio of a HIPE is defined as the percentage of the final height of the dispersed phase of the HIPE in the centrifuge tube after centrifugation relative to its initial height in the centrifuge tube before centrifugation. The minimum interpore diameter of a porous microstructure was measured by capillary flow porometry (PMI Porous Materials Inc., CFP-1100AE), and the mechanical strength was evaluated by pinching individual porous microstructures with bare hands to check whether they are easy to break. Measured results are shown in Table 2 below.

Table 2

|  | Compression ratio (%) | Porosity (%) | Mechanical Strength |
|---|---|---|---|
| Reaction A | 4.5 | 71.01 | Sufficient |
| Reaction B | 13.4 | 81.33 | Sufficient |
| Reaction C | 15.8 | 81.80 | Sufficient |
| Reaction D | 17.0 | 83.75 | Sufficient |
| Reaction E | 20.0 | 84.04 | Sufficient |
| Reaction F | 20.1 | 87.25 | Fragile |
| Reaction G | 20.4 | 90.18 | Fragile |

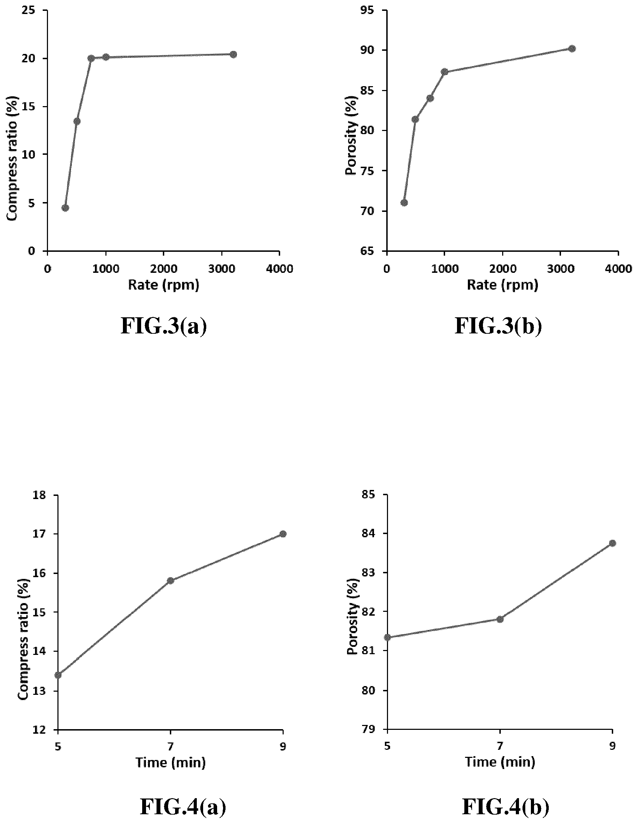

As shown in Table 1, Reactions A-B and E-G involve subjecting the HIPE to different intensities of centrifugal force for a fixed duration (5 minutes). As shown in Table 2 and FIGS. 3(a), 3(b), the greater the centrifugal force applied for the fixed duration, the higher the compression ratio of the HIPE, and the higher the porosity of the porous microstructure produced. However, if the centrifugal force applied is too large, such as centrifuged at a rate of more than 1000 rpm, the porous microstructure produced would be easily broken by pinching with bare hands, indicating that its mechanical strength is considerably reduced.

Furthermore, Reactions B-D involve subjecting the HIPE to a fixed centrifugal force for different duration times. As shown in Table 2 and FIGS. 4(a), 4(b), the longer the time under the fixed centrifugal force, the higher the compression ratio of the HIPE, and the higher the porosity of the porous microstructure produced.

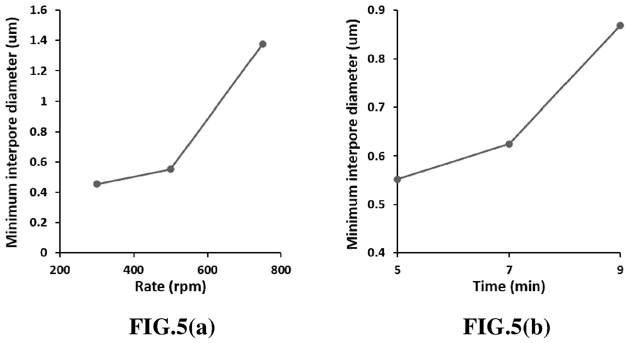

FIGS. 5(a) and 5(b) further show that the greater the centrifugal force applied to the HIPE or the longer the centrifugal duration the HIPE experiences, the bigger the diameter of the interpores in the porous microstructure produced. Please note that Reactions A-G are comparative examples and do not undergo pre-polymerization and are thus supplied as examples to be compared to the porous microstructures of Reactions 1 and 3 as described here below.

Preparation of Porous Microstructures Demonstrating Synergistic Effects of Pre-polymerization and Forced Sedimentation

21 grams of styrene (Acros Organics B.V.B.A.), 9 grams of divinylbenzene (DVB; Sigma-Aldrich Corporation, USA), 0.8 grams of benzyl peroxide (BPO) and 2 grams of sorbitan monooleate (trade name Span®80; Emperor Chemical Co., Ltd.) were mixed with ultrasonic agitation to prepare a continuous phase composition. 60 grams of deionized water and 0.6 grams of $CaCl_2$ were then added to the continuous phase composition, and a water-in-oil emulsion was prepared by vigorous stirring for 40 seconds using a high-speed homogenizer (model T25; IKA, Germany). The experiment herein was divided into four reactions, in which Reactions 1 and 3, after being stirred for 30 seconds, were added with 100 μl

of N,N,N',N'-tetramethylethylenediamine (TEMED) as the polymerization promoter to facilitate the pre-polymerization of styrene monomers with DVB crosslinking agent, whereas Reactions 2 and 4 were not added with polymerization promoter. Afterwards, Reactions 1 and 2 were centrifuged, while Reactions 3 and 4 were not subjected to centrifugal force.

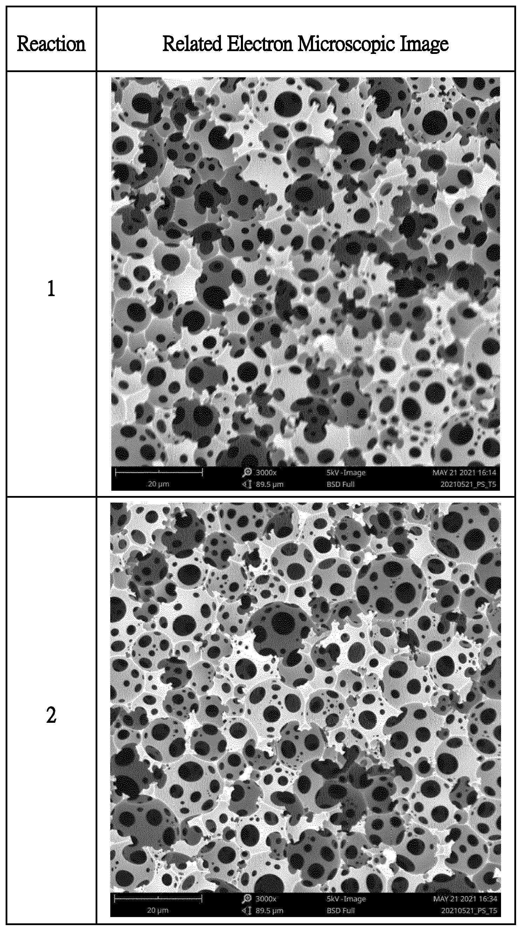

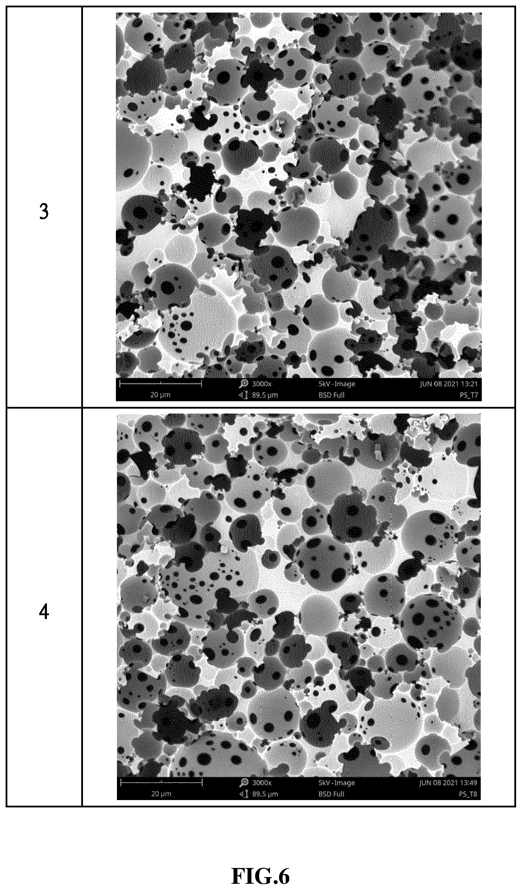

The resultant emulsions were baked in an oven (model DENG YNG DO60) to complete polymerization. The porous microstructures thus obtained were rinsed with ethanol to remove unreacted contents. The porous microstructures were then dried under vacuum to obtain dried porous microstructures. The average pore sizes of the dried porous microstructures were measured by capillary flow porometry (PMI Porous Materials Inc., CFP-1100AE), and the measured results were shown in Table 3 below. FIG. 6 further shows cross-sectional images of the porous microstructures taken by scanning electron microscopy (Thermo Fisher Scientific Inc., Phenom Pro).

Table 3

| Reaction | Pre-polymerization | Centrifugation | Average Pore Size |
|---|---|---|---|
| 1 | ○ | ○ | 1.36 μm |
| 2 | × | ○ | 0.27 μm |
| 3 | ○ | × | 0.86 μm |
| 4 | × | × | 0.89 μm |

As shown in Table 3 and FIG. 6, the porous microstructure produced from Reaction 2 has an average pore size as small as 0.27 μm and shows uneven pore sizes as observed under scanning electron microscopy. In contrast, Reaction 1 results in a porous microstructure which shows a more uniform pore size distribution and has a much higher average pore size of 1.36 μm. This indicates that the pre-polymerization step is effective in suppressing generation of tiny pores and further facilitating the uniformity of pore sizes. Moreover, Reactions 3 and 4 which were not subjected to centrifugation result in porous microstructures whose spherical inner pores are shown to be separated from one another by thick inner walls, resulting in uneven size distribution of the interpores. The results suggest that the centrifugation step can help facilitate the uniformity of pore sizes. The experiment herein clearly demonstrates that the combined and sequential exertion of pre-polymerization and centrifugation (*i.e.*, Reaction 1) achieves a porous microstructure with uniform pore size distribution and high porosity without substantially compromising its mechanical strength. stirring for 40 seconds using a high-speed homogenizer (model T25; IKA, Germany). The experiment herein was divided into four reactions, in which Reactions 1 and 3, after being stirred for 30 seconds, were added with 100 μl of N,N,N',N'-tetramethylethylenediamine (TEMED) as the polymerization promoter to facilitate the pre-polymerization of styrene monomers with DVB crosslinking agent, whereas Reactions 2 and 4 were not added with polymerization promoter. Afterwards, Reactions 1 and 2 were centrifuged, while Reactions 3 and 4 were not subjected to centrifugal force.

The resultant emulsions were baked in an oven (model DENG YNG DO60) to complete polymerization. The porous microstructures thus obtained were rinsed with ethanol to remove unreacted contents. The porous microstructures were then dried under vacuum to obtain dried porous microstructures. The average pore sizes of the dried porous microstructures were measured by capillary flow porometry (PMI Porous Materials Inc., CFP-1100AE), and the measured results were shown in Table 3 below. FIG. 6 further shows cross-sectional images of the porous microstructures taken by scanning electron microscopy (Thermo Fisher Scientific Inc., Phenom Pro).

Table 3

| Reaction | Pre-polymerization | Centrifugation | Average Pore Size |
|---|---|---|---|
| 1 | ○ | ○ | 1.36 μm |
| 2 | × | ○ | 0.27 μm |
| 3 | ○ | × | 0.86 μm |
| 4 | × | × | 0.89 μm |

As shown in Table 3 and FIG. 6, the porous microstructure produced from Reaction 2 has an average pore size as small as 0.27 μm and shows uneven pore sizes as observed under scanning electron microscopy. In contrast, Reaction 1 results in a porous microstructure which shows a more uniform pore size distribution and has a much higher average pore size of 1.36 μm. This indicates that the pre-polymerization step is effective in suppressing generation of tiny pores and further facilitating the uniformity of pore sizes. Moreover, Reactions 3 and 4 which were not subjected to centrifugation result in porous microstructures whose spherical inner pores are shown to be separated from one another by thick inner walls, resulting in uneven size distribution of the interpores. The results suggest that the centrifugation step can help facilitate the uniformity of pore sizes. The experiment herein clearly demonstrates that the combined and sequential exertion of pre-polymerization and centrifugation (*i.e.*, Reaction 1) achieves a porous microstructure with uniform pore size distribution and high porosity without substantially compromising its mechanical strength.

**Claims**

1. A method for producing a porous microstructure comprising the steps of:

    in the presence of a polymerization initiator and an emulsion stabilizer, emulsifying a continuous phase composition containing at least one monomer and a crosslinking agent with a dispersed phase composition containing a solvent to obtain an emulsion containing a continuous phase and a dispersed phase dispersed in the continuous phase;
    pre-polymerizing the at least one monomer and the crosslinking agent, so that the at least one monomer and the crosslinking agent are partially polymerized to an extent that the emulsion has an increased viscosity while still being flowable;
    subjecting the emulsion to a forced sedimentation to obtain a high internal phase emulsion, wherein the dispersed phase has a volume fraction of at least 74.05% (v/v) in the high internal phase emulsion, and wherein the subjecting the emulsion to a forced sedimentation comprises subjecting the emulsion to centrifugation and removing an excess part of the continuous phase separated from the dispersed phase; and
    curing the continuous phase in the high internal phase emulsion and removing the dispersed phase to obtain the porous microstructure;
    wherein the emulsion further comprises a polymerization promoter selected from the group consisting of N,N,N',N'-tetramethylethylenediamine (TEMED), N,N,N',N'',N''-pentamethyl diethylene triamine (PMDTA), tris(2-dimethylamino) ethylamine, 1,1,4,7,10,10-hexamethyltriethylenetetramine, and 1,4,8,11-tetramethyl-1,4,8,11-tetraazacyclotetradecane.

2. The method as claimed in any one of the preceding claims, wherein the pre-polymerizing step enables 5% to 50% of the at least one monomer and the crosslinking agent to undergo polymerization or crosslinking reaction.

3. The method as claimed in any one of the preceding claims, wherein the at least one monomer is selected from the group consisting of ethylenically unsaturated monomers and acetylenically unsaturated monomers.

4. The method as claimed in any one of the preceding claims, wherein the at least one monomer is selected from the group consisting of acrylic acids, acrylic acid esters, methacrylic acids, methacrylic acid esters, acrylamides, methacrylamides, styrene and its derivatives, silanes, pyrroles, divinylbenzene, 4-vinylbenzyl chloride, vinylpyridine, and combinations thereof.

5. The method as claimed in any one of the preceding claims, wherein the crosslinking agent is an oil-soluble crosslinking agent selected from the group consisting of ethylene glycol dimethacrylate (EGDMA), polyethylene glycol dimethacrylate (PEGDMA), ethylene glycol diacrylate (EGDA), triethylene glycol diacrylate (TriEGDA) and divinylbenzene (DVB).

6. The method as claimed in any one of claims 1-4, wherein the crosslinking agent is a water-soluble crosslinking agent selected from the group consisting of N,N-diallylacrylamide and N,N'-methylenebisacrylamide (MBAA).

7. The method as claimed in any one of the preceding claims, wherein the emulsion stabilizer is selected from nonionic surfactants.

8. The method as claimed in any one of the preceding claims, wherein the emulsion stabilizer is selected from the group consisting of sorbitan monolaurate, sorbitan tristearate, sorbitan monooleate, glycerol monooleate, polyethylene glycol 200 dioleate, polyoxyethylene-polyoxypropylene block copolymers, castor oil, mono-ricinoleic acid glyceride, distearyl dimethyl ammonium chloride and dioleyl dimethyl ammonium chloride.

**Patentansprüche**

1. Ein Verfahren zur Herstellung einer porösen Mikrostruktur, das die folgenden Schritte beinhaltet:

   in Gegenwart eines Polymerisationsinitiators und eines Emulsionsstabilisators, Emulgieren einer kontinuierlichen Phasenzusammensetzung, die mindestens ein Monomer und ein Vernetzungsmittel beinhaltet, mit einer dispersen Phasenzusammensetzung, die ein Lösungsmittel enthält, um eine Emulsion zu erhalten, die eine kontinuierliche Phase und eine in der kontinuierlichen Phase dispergierte disperse Phase enthält;
   Vorpolymerisieren des mindestens einen Monomers und des Vernetzungsmittels, sodass das mindestens eine Monomer und das Vernetzungsmittel bis zu einem solchen Grad teilweise polymerisiert werden, dass die Emulsion eine erhöhte Viskosität aufweist, während sie noch fließfähig ist;
   Unterziehen der Emulsion einer erzwungenen Sedimentierung, um eine Emulsion mit hochdisperser Phase zu erhalten, wobei die disperse Phase eine Volumenfraktion von mindestens 74,05% (Vol./Vol.) in der Emulsion mit hochdisperser Phase aufweist, und wobei das Unterziehen der Emulsion einer erzwungenen Sedimentierung das Unterziehen der Emulsion einer Zentrifugierung und Entfernen eines überschüssigen Teils der kontinuierlichen Phase, die von der dispersen Phase getrennt ist, beinhaltet; und
   Härten der kontinuierlichen Phase in der Emulsion mit hochdisperser Phase und Entfernen der dispersen Phase, um die poröse Mikrostruktur zu erhalten;
   wobei die Emulsion ferner einen Polymerisationsaktivator beinhaltet, der aus der Gruppe ausgewählt ist, die aus N,N,N',N'-Tetramethylethylendiamin (TEMED), N,N,N',N'',N''-Pentamethyldiethylentriamin (PMDTA), Tris(2-dimethylamino)ethylamin, 1,1,4,7,10,10-Hexamethyltriethylentetramin und 1,4,8,11-Tetramethyl-1,4,8,11-tetraazacyclotetradecan besteht.

2. Verfahren nach einem der vorhergehenden Ansprüche, wobei der Vorpolymerisierungsschritt es 5% bis 50% des mindestens einen Monomers und des Vernetzungsmittels ermöglicht, eine Polymerisations- oder Vernetzungsreaktion zu durchlaufen.

3. Verfahren nach einem der vorhergehenden Ansprüche, wobei das mindestens eine Monomer aus der Gruppe ausgewählt ist, die aus ethylenisch ungesättigten Monomeren und acetylenisch ungesättigten Monomeren besteht.

4. Verfahren nach einem der vorhergehenden Ansprüche, wobei das mindestens eine Monomer aus der Gruppe ausgewählt ist, die aus Acrylsäuren, Acrylsäureestern, Methacrylsäuren, Methacrylsäureestern, Acrylamiden, Methacrylamiden, Styrol und seinen Derivaten, Silanen, Pyrrolen, Divinylbenzol, 4-Vinylbenzylchlorid, Vinylpyridin und Kombinationen davon besteht.

5. Verfahren nach einem der vorhergehenden Ansprüche, wobei das Vernetzungsmittel ein öllösliches Vernetzungsmittel ist, das aus der Gruppe ausgewählt ist, die aus Ethylenglycoldimethacrylat (EGDMA), Polyethylenglycoldimethacrylat (PEGDMA), Ethylenglycoldiacrylat (EGDA), Triethylenglycoldiacrylat (TriEGDA) und Divinylbenzol (DVB) besteht.

6. Verfahren nach einem der Ansprüche 1-4, wobei das Vernetzungsmittel ein wasserlösliches Vernetzungsmittel ist, das aus der Gruppe ausgewählt ist, die aus N,N-Diallylacrylamid und N,N'-Methylenbisacrylamid (MBAA) besteht.

7. Verfahren nach einem der vorhergehenden Ansprüche, wobei der Emulsionsstabilisator aus nichtionischen Tensiden ausgewählt ist.

8. Verfahren nach einem der vorhergehenden Ansprüche, wobei der Emulsionsstabilisator aus der Gruppe ausgewählt ist, die aus Sorbitanmonolaurat, Sorbitantristearat, Sorbitanmonooleat, Glycerolmonooleat, Polyethylenglycol-200-dioleat, Polyoxyethylen-Polyoxypropylen-Blockcopolymeren, Rizinusöl, Monoricinolsäureglycerid, Distearyldimethylammoniumchlorid und Dioleyldimethylammoniumchlorid besteht.

**Revendications**

1. Procédé de fabrication d'une microstructure poreuse comprenant les étapes qui consistent à :

   en présence d'un initiateur de polymérisation et d'un stabilisateur d'émulsion, émulsionner une composition en phase continue contenant au moins un monomère et un agent de réticulation avec une composition en phase dispersée contenant un solvant pour obtenir une émulsion contenant une phase continue et une phase dispersée qui est dispersée dans la phase continue ;

prépolymériser l'au moins un monomère et l'agent de réticulation, de telle sorte que l'au moins un monomère et l'agent de réticulation soient partiellement polymérisés dans une mesure telle que l'émulsion ait une viscosité accrue tout en restant fluide ;

soumettre l'émulsion à une sédimentation forcée pour obtenir une émulsion à phase interne hautement concentrée, la phase dispersée ayant une fraction volumique d'au moins 74,05 % (v/v) dans l'émulsion à phase interne hautement concentrée, et le fait de soumettre l'émulsion à une sédimentation forcée consistant à soumettre l'émulsion à une centrifugation et à éliminer une partie excédentaire de la phase continue séparée de la phase dispersée ; et

durcir la phase continue dans l'émulsion à phase interne hautement concentrée et éliminer la phase dispersée pour obtenir la microstructure poreuse ;

dans lequel l'émulsion comprend en outre un promoteur de polymérisation sélectionné dans le groupe constitué de la N,N,N',N'-tétraméthyléthylènediamine (TEMED), de la N,N,N',N",N"-pentaméthyldiéthylènetriamine (PMDTA), de la tris(2-diméthylamino)éthylamine, de la 1,1,4,7,10,10-hexaméthyltriéthylènetétramine, et du 1,4,8,11-tétraméthyl-1,4,8,11-tétraazacyclotétradécane.

2. Procédé selon l'une quelconque des revendications précédentes, dans lequel l'étape de prépolymérisation permet à 5 % à 50 % de l'au moins un monomère et de l'agent de réticulation de subir une réaction de polymérisation ou de réticulation.

3. Procédé selon l'une quelconque des revendications précédentes, dans lequel l'au moins un monomère est sélectionné dans le groupe constitué de monomères à insaturation éthylénique et de monomères à insaturation acétylénique.

4. Procédé selon l'une quelconque des revendications précédentes, dans lequel l'au moins un monomère est sélectionné dans le groupe constitué d'acides acryliques, d'esters d'acides acryliques, d'acides méthacryliques, d'esters d'acides méthacryliques, d'acrylamides, de méthacrylamides, du styrène et de ses dérivés, de silanes, de pyrroles, du divinylbenzène, du chlorure de 4-vinylbenzyle, de la vinylpyridine, et de combinaisons de ceux-ci.

5. Procédé selon l'une quelconque des revendications précédentes, dans lequel l'agent de réticulation est un agent de réticulation soluble dans l'huile sélectionné dans le groupe constitué du diméthacrylate d'éthylène glycol (EGDMA), du diméthacrylate de polyéthylène glycol (PEGDMA), du diacrylate d'éthylène glycol (EGDA), du diacrylate de triéthylène glycol (TriEGDA) et du divinylbenzène (DVB).

6. Procédé selon l'une quelconque des revendications 1 à 4, dans lequel l'agent de réticulation est un agent de réticulation hydrosoluble sélectionné dans le groupe constitué du N,N-diallylacrylamide et du N,N'-méthylènebisacrylamide (MBAA).

7. Procédé selon l'une quelconque des revendications précédentes, dans lequel le stabilisateur d'émulsion est sélectionné parmi des tensioactifs non ioniques.

8. Procédé selon l'une quelconque des revendications précédentes, dans lequel le stabilisateur d'émulsion est sélectionné dans le groupe constitué du monolaurate de sorbitane, du tristéarate de sorbitane, du monooléate de sorbitane, du monooléate de glycérol, du dioléate de polyéthylène glycol 200, de copolymères à blocs de polyoxyéthylène-polyoxypropylène, de l'huile de ricin, du glycéride d'acide mono-ricinoléique, du chlorure de distéaryldiméthylammonium et du chlorure de dioléyldiméthylammonium.

Emulsifying a continuous phase composition with a dispersed phase composition

Pre-polymerizing the emulsion

Subjecting the pre-polymerized emulsion to forced sedimentation to obtain a HIPE

Curing the HIPE

FIG.1

**FIG.2**

**FIG.3(a)**

**FIG.3(b)**

**FIG.4(a)**

**FIG.4(b)**

**FIG.5(a)**

**FIG.5(b)**

| Reaction | Related Electron Microscopic Image |
|----------|-----------------------------------|
| 1 | |
| 2 | |

**FIG.6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107311185 A
- JP 4766812 B
- US 2004204510 A1
- US 5189070 A

**Non-patent literature cited in the description**

- **COLVER P.J. ; BON, S.A.F.** Cellular Polymer Monoliths Made via Pickering High Internal Phase Emulsions. *Chem. Mater,* 2007, vol. 19, 1537-1539